# EUROPEAN PATENT APPLICATION

(11) **EP 1 623 914 A1**
(43) Date of publication of application: **08.02.2006**
(21) Application number: 04077205.5
(22) Date of filing: 02.08.2004
(51) Int. Cl.: B62H 5/00, B62H 5/20

(54) **Bicycle lock, use thereof and system for giving bicycles on loan**

(71) Applicant: Nederlandse Organisatie voor Toegepast-Natuurwetenschappelijk Onderzoek TNO, 2628 VK Delft (NL)
(72) Inventor: Aulbers, Antonius Paulus, 5644 BD Eindhoven (NL); de Vreede, Frederikus Johannes Maria, 5616 HZ Eindhoven (NL); Enting, Hendrik, 5685 HT Best (NL); den Besten, Anna Elizabeth, 4194 VG Meteren (NL)
(74) Representative: Winckels, Johannes Hubertus F.

(57) **Abstract**

The invention relates to a bicycle lock (1), comprising locking means (5,8) for locking a bicycle (10), and releasing means (6) for removing the locking. The releasing means (6) can be operated with a pass (2), which is provided with a valid operating code (3). For this purpose, the lock comprises reading means (15), preferably non-contact, by means of which the operating code (3) can be read out and compared with a code preprogrammed in the lock. In order to save energy consumption, the reading means are preferably provided with switching means, which are preferably automatically switched on when the pass is brought into a reading position.

The invention further relates to a system for giving bicycles on loan, wherein each bicycle is provided with a lock according to the invention, and wherein issue and collection of the bicycles is managed with the aid of the issue and collection of passes (2).

## Description

The invention relates to a lock for protecting a cycle, such as a bicycle, moped, mobility scooter or motorcycle, from unauthorized use.

Such locks are generally known. They comprise locking means which can, usually manually, be brought into a locking position by a user, and releasing means by which the locking position can be removed. For this purpose, the releasing means are operated with a key.

A disadvantage of these locks is that, per lock, the releasing means and key intended for them need to be provided with a unique, matching geometry, which is expensive in terms of production. Moreover, the keys of different locks often look very much alike, which may cause confusion for management of a series of locks, for instance by a bicycle dealer or rental company. Further, in case of loss, damage or theft of a key, a new key needs to be ordered, or, in the worst case, the whole lock needs to be replaced.

It is an object of the invention to provide a lock where these disadvantages of the known locks are at least partly obviated. For this purpose, a lock according to the invention is characterized by the measures according to claim 1.

With a lock according to the invention, the releasing means can be operated with a pass, provided with a code specific to the respective lock. For this purpose, the releasing means are provided with reading means for reading out and comparing the code with a unique code stored in the releasing means. With a lock according to the invention, the locks hence differ from one another in their code, not in their geometry. As a result, the locks can all be the same in terms of hardware and be manufactured in mass production. The number of available distinctive codes is virtually unlimited. An additional advantage is that the codes can simply be changed by reprogramming. In the case of damage or loss of the pass, it is not necessary to replace the entire lock, but a new pass can simply be produced, with the respective code. The code of the lock is preferably reprogrammable so that, in case of theft of a pass, the code of the associated lock can be replaced by a new code. In order to prevent abuse, all codes issued and/or reported as stolen may be registered in a database set up for this purpose, which is only accessible for a limited number of authorized people, for instance manufacturers of the locks and/or certified distributors thereof.

In a further elaboration, a lock according to the invention is characterized by the measures according to claim 2.

With non-contact reading means, the pass only needs to be brought into the proximity of the reading means in order to be read out. This results in ease of operation for a user and a simple, robust lock, since it does not need to be provided with an insertion opening for a pass, which is susceptible to vandalism. In addition, non-contact reading means are less sensitive to interferences such as dirt, scratches and the like which the pass may get in the course of time, due to use and wear.

In an advantageous embodiment, a lock according to the invention is characterized by the measures according to claim 3.

Known reading means usually utilize a detection element which permanently scans the immediate surroundings, searching for a code to be read out. With a lock according to the invention, switching means are provided, by which the reading means are not switched until reading out is actually desired. Thus, a considerable amount of energy can be saved, which is particularly important for a bicycle lock, since the available amount of energy is limited. In addition, it can thus be prevented that the lock is unintentionally opened when a pass with valid code is accidentally held in the proximity of the reading means.

The switching means may comprise, for instance, a push button or a switch provided on or near the lock, to be operated by the user when he wishes to open the lock. The operation of such switching means requires little effort, in any case no more than with the conventional locks to be opened with a key.

In a particularly advantageous embodiment, the switching means are designed such that they are automatically switched on when the pass is brought into a reading position and are automatically switched off when the reading action has been completed or the pass is taken out of the reading position. Thus, the ease of use still further increases and the reading means are prevented from accidentally remaining switched on after reading out of the code, with its aforementioned disadvantages. An additional advantage is that the position of the pass is unambiguously known upon switching on the reading means. As a result, the reading means, in particular the position and the power thereof, can accurately be adjusted, so that the energy consumption can still further be reduced.

According to a further aspect of the invention, the lock may be provided with a receiving facility for the pass, according to the measures according to claim 5. Thus, the reading position of the pass is fixed in an unambiguous and foolproof manner, with its aforementioned advantages. In that case, the switching means may, for instance, be provided around an insertion opening of the receiving facility or near an opposite end thereof, so that operation of the switching means automatically takes place when the pass is inserted and taken out.

The receiving facility and reading means are preferably arranged such that the pass, when it is not read out, can be taken from the lock and can be kept by a user. This reduces the risk of loss or damage and the lock does not need to comprise security means to prevent theft of the pass. In addition, the pass can thus be intended for multiple purposes, for instance as an admission ticket to a bicycle storage or a public transport means, so that the user needs to have fewer passes. In that case, the pass may be provided with a more extensive readable or rewritable memory for storage of further data, for instance concerning the user, access codes, payment details, etc.

According to a further aspect of the invention, the lock may be provided with attachment means, such as a chain or cable, with which the bicycle can be attached to the fixed world, according to the measures according to claim 9. Thus, the cycle can still more effectively be protected from theft or unauthorized use. These attachment means can be opened and closed together with the locking means.

The invention further relates to a method for giving bicycles on loan, where each bicycle is provided with a lock according to the invention. Here, the locks may have a dual function, by means of which, on the one hand, the issue of the bicycles can be efficiently managed and, on the other hand, the bicycles can be locked during their loan, like with a regular lock. An advantage for the loaner is that he does not need to manage large bunches of keys and spare keys. When a customer checks in, the loaner can produce a pass on site, by programming it with the lock code of a bicycle to be given on loan. Upon return of the bicycle, the pass is collected and the code can be deleted, after which the pass can be used again for a next customer. Alternatively, the customer may have a personal pass, provided with a fixed code, which is programmed into the lock of a bicycle upon issue of that respective bicycle. The issue and deletion of the codes is preferably kept track of via a central management system. Thus, it is clear at all times which locks have been released and possibly to whom, when, etc. In the case of loss or damage of a pass, partly on the basis of this information, a new pass can simply be produced.

Particularly when the passes have a personal character, it can be advantageous to store further data on them, for instance personal or payment details concerning the user, so that the pass can also serve as a proof of identity at the loan point. In addition or alternatively, for instance details concerning the loan can be written on the pass, such as for instance the time and the location of the issue and collection, on the basis whereof the bicycles can be monitored and the total loan time and any associated costs to be charged can be kept. Thus, the loan process can be computerized to a large extent, so that staff and time can be saved. If desired, as already indicated hereinabove, the pass may have a multifunctional character and may serve as, for instance, an admission ticket to other services, such as public transport, which are possibly associated with the bicycle loan.

Incidentally, the bicycles may be returned at a different location than where they have been picked up. For this purpose, for instance within a particular region, a network of issue and collection locations may be provided, where member users can pick up and return bicycles, respectively. Thus, in a simple manner, with a limited number of bicycles, a relatively large group of users can be temporarily provided with a bicycle.

The further subclaims describe further advantageous embodiments of a lock according to the invention and advantageous uses thereof in a method and system for giving bicycles on loan.

By way of illustration, embodiments of a lock according to the invention and possible uses thereof will be elucidated in more detail with reference to the drawing, in which:
Fig. 1A shows a side elevational view of a part of a bicycle, provided with a lock according to the invention:
Fig. 1B shows, in more detail, a lock according to the invention, in perspective front view;
Fig. 2A shows a lock according to the invention, in cutaway top plan view:
Fig. 2B shows the lock according to Fig. 2A. in taken-apart condition:
Fig. 2C shows, in detail, a part of the releasing means of the lock of Fig. 2B;
Figs. 3A-D show some alternative exemplary embodiments of a lock according to the invention with different positions for an insertion opening of the pass, in combination with a switch for switching the releasing means on and/or off; and
Figs. 4A-C diagrammatically show a possible use of a lock according to the invention in a bicycle management system.

In this description, a lock will be described for a bicycle, where the term bicycle is to be understood in the broadest sense, as comprising any type of bicycle, for instance a recumbent bicycle, racing bicycle, tandem bicycle, collapsible bicycle or the like. In addition, the lock according to the invention is applicable in other types of cycles, such as mopeds, motorcycles, mobility scooters and the like, where, if required, design and/or dimensions of the lock can be adapted.

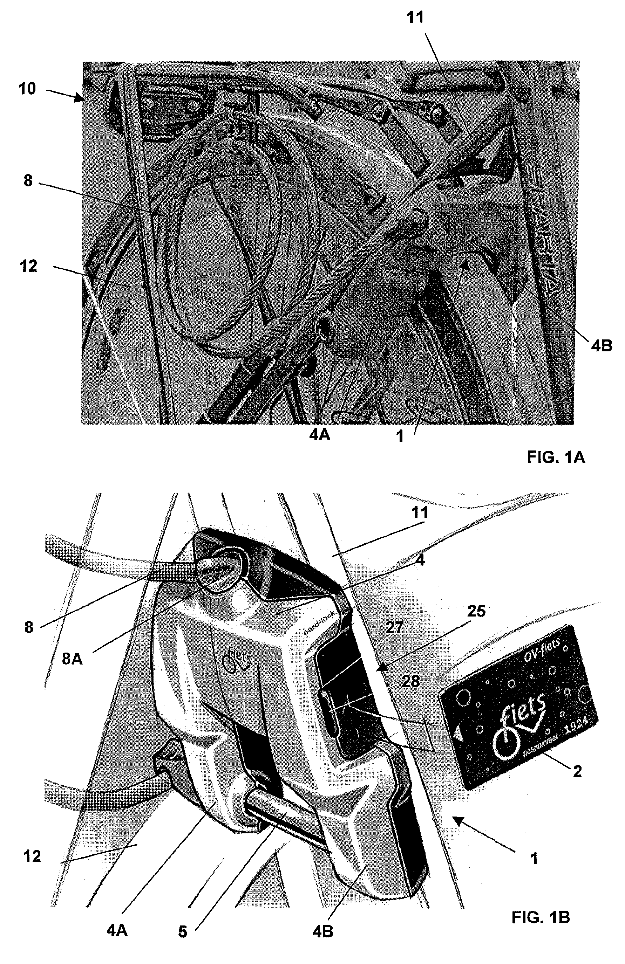

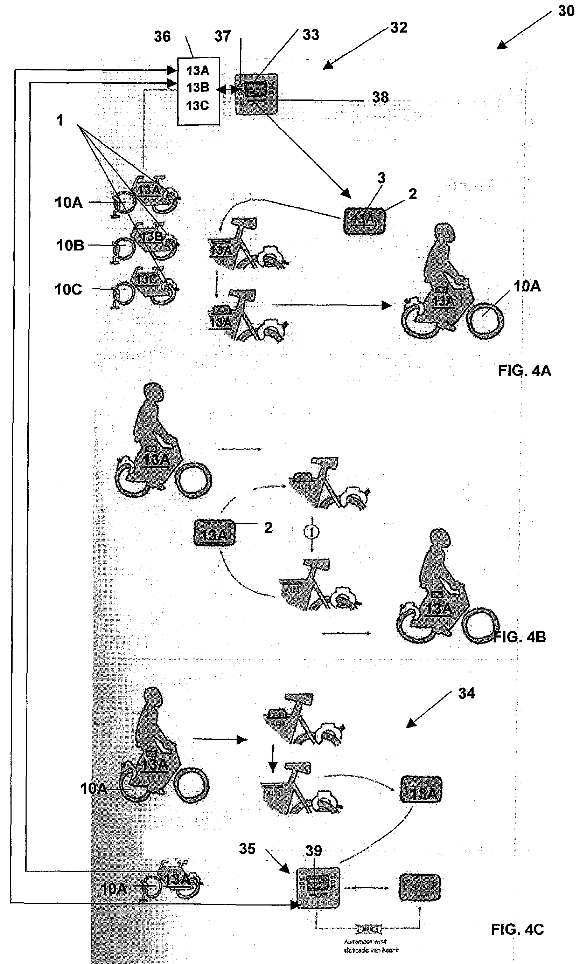

Fig. 1A shows the rear part of a bicycle 10, provided with a lock 1, which, according to the invention, can be opened with a pass 2 (see Figs. 1B and 3). This pass 2 preferably comprises a substantially rectangular card, for instance manufactured from plastic and preferably of similar dimensions as a credit card or bankcard, so that a user can simply keep the operating pass 2 with these cards. The pass 2 is provided with memory means 18, such as a magnetic strip or (flash) chip, for storage of at least one operating code 3. In a particularly advantageous embodiment, the memory means 18 have sufficient storage capacity for further data, for instance data concerning the user or the use of the pass 2 or codes which provide access to further services. Thus, the pass 2 can be used for multiple purposes, for instance as proof of identity or admission ticket for a loan system to be described hereinafter in more detail. Due to such multifunctionality, a user needs to have fewer passes on him and a provider can offer multiple services on one pass and thus bind the user to the provider.

In the exemplary embodiment shown, the lock 1 is designed as a catch lock with a substantially U-shaped housing 4, with which the lock 1 is attached to the frame part 11 of the bicycle 10, near a rear wheel 12 thereof. The legs 4A,B of the housing 4 extend on both sides of the rear wheel 12, so that locking means in the form of a bar 5 can, in a locking position, extend between these legs 4A,B, through the rear wheel 12, thereby blocking the wheel 12 (see Fig. 1B).

Such a catch lock offers the advantage that it is very robust and breaking-resistant, in that this lock can be manufactured largely from solid steel and does not comprise vulnerable slots or similar openings. It will be clear, however, that a lock according to the invention may be designed in many different manners, for instance as a ring lock or U-lock. Here, the lock 1 can be attached to the bicycle 10 in a fixed position (as in the example shown) or be detachably provided around a frame part 11, so that, when locking the bicycle 10, the lock can be provided around the front or rear wheel 12 as desired. Of course, the lock 1 may also be arranged to block other parts of the bicycle 10, such as for instance handlebars or pedals, in order to prevent unauthorized use.

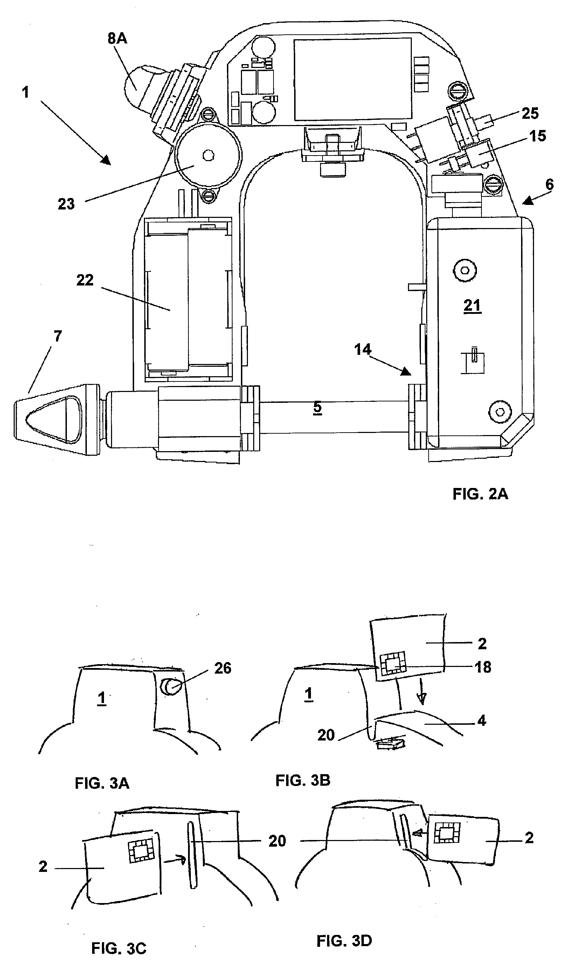

Figs. 2A-C show, in more detail, the lock according to Fig. 1 in cutaway view. In addition to aforementioned U-shaped housing 4 and locking means 5,8, the lock 1 comprises releasing means 6 for fixing the locking means 5,8 in the locking position, or releasing them.

In the example shown, the locking means 5,8 comprise a bar 5, which is movable between the locking position as shown in Fig. 1B and Figs. 2A-C, where the bar 5 connects the legs 4A,B of the housing 4, and an unlocked position, where the opening between the two legs 4A,B is released. In the exemplary embodiment shown, the locking means additionally comprise a cable 8, which is, near a first end 8A, rotationally connected with the housing 4 and is, near the other end, fixedly connected with the bar 5. With this cable 8, the bicycle 10 can be anchored to the fixed world, for instance a tree, lamppost or bicycle storage, by putting the cable 8 around the respective object and locking the locking bar 5. Thus, the loop formed by the cable is locked at the same time. The locking bar 5 is preferably provided with prestressing means 9, for instance a spring, which prestress the bar 5 in the direction of an unlocked position, and an engaging part 7 with which the locking bar 5 can manually be brought into the locking position, against the prestressing force.

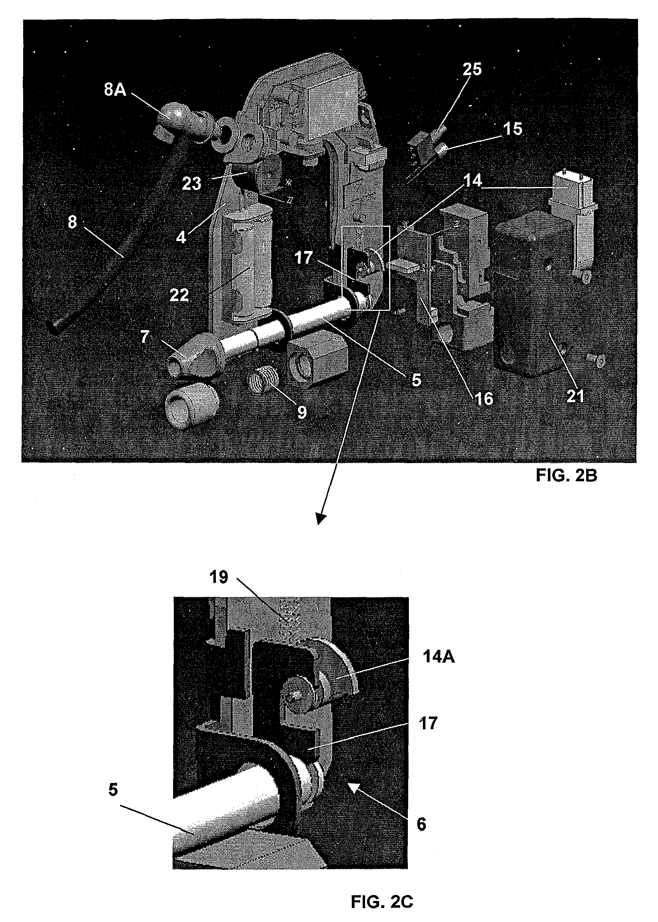

The releasing means 6 comprise a movable cam or catch 17, driving means 14, 14A, reading means 15, a control unit 16 and a power supply source 22. With the aid of second prestressing means 19, the cam 17 has been prestressed into a blocking position in which the cam 17 locks the locking bar 5 in its locking position (see Fig. 2C) and, with the aid of driving means 14, it can be moved to a releasing position in which this fixation is removed. Vane 14A (see Fig. 2C) ensures that the position of cam 17 can be detected. The reading means 15 are arranged to read out the code 3 of a pass 2, when this pass is brought into contact with or into the proximity of these reading means 15. The control unit 16 is arranged to compare the read code 3 with a lock code 13 stored in the control unit 16, and to activate the driving means 14 when the two codes 3,13 correspond. The driving means 14 and control unit 16 are preferably included in a separate metal housing 21, as shown in Figs. 2A and B, in order to still better prevent this part from being broken open and the driving means 14 from being directly controlled. Here, the housing 21 is preferably designed such that this housing 21 is locked in the locking position by the bar 5.

The reading means 15 may be designed in different manners, depending on the type of memory means 18 used on the operating pass 2. When these memory means 18 comprise, for instance, a magnetic strip, the reading means 15 can comprise a coil along which the magnetic strip is to be moved for the purpose of reading out the strip. In that case, the lock 1, at least the housing 4 thereof, can be provided with a suitable guide slot 20 (not shown), through which the pass 2 can be moved. If the memory means 18 comprise a chip, the reading means 15 can comprise a number of contact points which can be connected with corresponding contact points on the chip. For this purpose, the housing 4 of the lock 1 can be provided with a suitable insertion slot 20 for the pass 2 (see Figs. 3B-D).

Preferably, the memory means 18 and the reading means 15 are arranged for non-contact cooperation. For this purpose, the memory means 18 may, for instance, comprise a chip which can be read out by means of an RF signal transmitted and received by the reading means 15. In that case, the lock 1 does not need to comprise a slot 20 which is susceptible to pollution and sabotage for receiving the pass 2. Operation of the lock 1 can simply take place by holding the pass 2 at a short distance from the reading means 15.

The power supply source 22 is arranged to provide the driving means 14, reading means 15 and control unit 16 with energy, and may, for this purpose, comprise one or more batteries (as shown in Fig. 2A) or an accumulator, which may, for instance, be connected to a dynamo of the bicycle 10, so that the accumulator can be charged during use of the bicycle 10.

The lock 1 may further be provided with a sound source, such as a buzzer (see Figs. 2A,B) by means of which an auditory signal can be delivered to the user, for instance when the reading means 15 are finished with reading out the pass or when the lock has successfully been locked.

A lock 1 as described hereinabove works as follows. In order to lock the bicycle 1, the locking bar 5 is manually brought into the locking position with the aid of the engaging part 7, against the prestressing force of the first and second prestressing means 9, 19. Here, the cam 17 will assume a fixing position under the influence of the second prestressing means 19.

In order to open the lock 1, a pass 2 with valid code 3 is to be brought into the proximity of the reading means 15. The read code 3 is compared with the preprogrammed lock code 13 by the control unit 16. When the two codes 3,13 correspond, the driving means 14 are controlled to move the cam 17 to the releasing position. Thus, the locking bar 5 will be forced back to the unlocked position under the influence of the first prestressing means 9.

As said, the reading means 15 preferably work in a non-contact manner, with the aid of an RF signal. In order to prevent the reading means 15 from continuously transmitting and receiving this signal, and therefore unnecessarily consuming energy, the lock 1 is preferably provided with switching means 25 by which the reading means 15 can be switched on as desired.

Figs. 3A-D show four possible exemplary embodiments of such switching means 25 according to the invention, where the location and manner of operation mutually differ. Same or corresponding parts are designated by same or corresponding reference numerals. Thus, the switching means 25 in Fig. 3A are configured as a push button 26 on the outside of the housing 4, which push button can simply be operated by a user at the moment when he brings a pass 2 into a reading position. Such a button 26 may, for instance, be designed as shown in Figs. 1B and 2A, where, in the housing 4, an opening 27 is provided, covered with a flexible cover element 28, for instance of rubber. When this cover element 28 is pushed by the user, switching means 25 arranged below this element 28 in the housing 4 are activated and an electrical supply circuit to the reading means 15 is closed or, conversely, interrupted.

Figs. 3B-D show alternative embodiments, where the pass 2 is at least temporarily inserted into a slot 20 for the purpose of reading out the pass. In that case, the switching means 25 are preferably included in or near this slot 20, so that they are 'automatically' activated by the pass 2, when this pass is inserted into the slot 20. Preferably, the switching means 25 are designed such that the switching means switch off 'automatically' when the pass 2 is taken out of the slot 20.

Of course, form and location of the slot 20 and the switching means 25 may vary. The slot 20 may, for instance, be designed as a slot open on three sides, as shown in Fig. 3B, where the pass 2 is moved through the slot 20 from front to back and where the switching means 25 are preferably provided near a front edge of the slot 20, as shown in Fig. 3B, along which the pass 2 passes first. Alternatively, the slot 20 can be closed on three side, as shown in Figs. 3C and D, where the pass 2 is inserted into the slot 20 via the only open side. In that case, the switching means can be provided near this insertion opening, or near an opposite end of the slot 20. The latter location has the advantage that the reading means 15 are not switched on until the pass 2 has correctly been inserted into the slot 20, and is thus correctly positioned.

The slots 20 may be dimensioned such that the pass 2 is largely or only partly received therein. Preferably, the releasing means 6, in particular the reading means 15, are designed such that the pass 2 can be taken out of the slot 20 after reading out of the code 3. As a result, the slot 20 does not need to comprise anti-theft security for the pass 2. The user can keep the pass 2 with him at all times, which reduces the risk of damage, loss or theft. In addition, the pass 2 can thus be used for other purposes, for instance as an admission ticket.

In addition to use as a regular lock, for protecting a bicycle 10 from unauthorized use, due to the operation by a programmable pass 2, a lock 1 according to the invention can advantageously be used to manage the issue and collection of bicycles 10 in for instance, a bicycle storage or a bicycle loan system 30.

The latter use, where a series of bicycles 10A-N are given on loan to different users, will be explained with reference to Figs. 4A-C. These diagrammatically show the successive steps which can be carried out within such a loan system 30 with a lock 1 according to the invention, namely giving the bicycle 1 on loan (Fig. 4A), locking the bicycle 1 during the loan (Fig. 4B) and returning the bicycle 1 and thus ending the loan (Fig. 4C).

For this purpose, the system 30 comprises at least one and preferably multiple geographically distributed issuing stations 32, one or more returning stations 34, which preferably but not necessarily coincide with the issuing stations 32 and a central management system 36 associated with the issuing and returning stations 32, 34. Each issuing station 32 (see Fig. 4A) is provided with a series of loanable bicycles 10A-C, which are each protected from unauthorized use by a lock 1A-C according to the invention, while each lock 1A-C is provided with a unique lock code 13A-C. These lock codes 13A-C have been inputted into the central management system 36. The or each issuing station 32 further comprises issuing means 33, which are connected to the central management system 36 and which comprise input means 37 for input of user and/or use data, and writing means 38, for programming the passes 2 with an operating code 3A-C, corresponding with a lock code 13A-C of a bicycle 10A-C to be given on loan. The or each returning station 34 comprises a series of storage places for returned bicycles 10, and collecting means 35, for collecting passes 2 associated with the returned bicycles. The collecting means 35 are connected to the central management system 36 and comprise reading means 39 for reading out and possibly deleting the operating codes 3A-C of the returned passes 2.

The loan system 30 described hereinabove works as follows. A user who wants to have the loan of a bicycle 10 checks in at an issuing station 32. Then, the user (or an employee of the issuing station 32) inputs data concerning himself and/or the intended use into the issuing means 33 via the input means 37. Thus, for instance personal details, the desired type of bicycle, the intended loan period or the intended returning point can be inputted. The issuing means 33 then consider, on the basis of these data and the data available in the central management system 36, which bicycle qualifies for loan. The associated lock code 13 is passed on to the writing means 38, which then produce a pass 2 by programming the memory 18 thereof with the respective code 13 and possibly (a part of) the above-mentioned further data. This pass is then issued to the user so that he can unlock the allocated bicycle 10 therewith. In the central management system 36, it is recorded that the bicycle 10 has been given on loan. Instead of a new pass 2, the user may also already have a pass himself, which may, for instance, have been purchased for a one-off amount, and which may already have been provided with personal details of the user.

During the loan, the user can use the lock 1 according to the invention and the associated pass 2 as a regular bicycle lock, for temporarily locking the bicycle 2 and/or anchoring the bicycle 2 to the fixed world, as shown in Fig. 4B. In addition, the pass 2 may possibly serve as an admission ticket for further services connected with the loan, such as for instance the use of a guarded bicycle storage or the use of public transport, etc.

In order to end the loan, the user returns the bicycle 10 at a returning station 34, which is, for this purpose, provided with storage places, where the user can store the bicycle and can lock it, as shown Fig. 4C. Then, the user returns his pass 2 at the collecting means 35, which read out the code of the pass 2, and verify, preferably via detection means (not shown) provided on the storage places, whether the bicycle 10 has really been returned. Then the code of the pass 2 can be deleted and the pass can be collected by the system, for a next use, or be returned to the user, if it is a personal pass. It is inputted into the central management system 36 that the respective bicycle 10 is available for loan again, and can be picked up at the respective returning station 34.

Thus, due to operation by a pass 2, a lock 1 according to the invention can be deployed in a more versatile manner than the known locks to be operated with keys. The passes 2 may also be deployed for multiple purposes. In addition, the passes 2 can simply be replaced in case of loss or damage.

The invention is by no means limited to the exemplary embodiments shown in the description and the drawing. All combinations of (parts of) embodiments described and/or shown are understood to be within the inventive concept. In addition, many variants thereof are possible within the scope of the invention, as set forth in the following claims.

## Claims

1. A bicycle lock (1), comprising locking means (5,8) arranged to prevent, in a locking position, unauthorized use of a bicycle (10), and releasing means (6) arranged to remove the locking position, **characterized in that** the releasing means (6) are operatable with a pass (2) provided with an operating code (3) and are, for this purpose, provided with reading means (15), arranged to read out and verify the operating code (3).

2. A lock (1) according to claim 1, wherein the reading means (15) and the pass (2) are arranged for non-contact reading out of the operating code (3).

3. A lock (1) according to claim 1 or 2, wherein the lock (1) comprises switching means (25) for activating the reading means (15).

4. A lock (1) according to claim 3, wherein the switching means (25) are positioned such that the operation thereof automatically takes place when the pass (2) is brought into a reading position.

5. A lock (1) according to any one of the preceding claims, wherein the lock (1) comprises a receiving facility (20) for receiving a pass (2), at least during the reading out thereof.

6. A lock (1) according to claim 5, wherein, in or near the receiving facility (20), switching means (25) are provided, for activating the reading means (15).

7. A lock (1) according to any one of the preceding claims, wherein the pass (2) is provided with memory means (18) for storage of additional information.

8. A lock (1) according to any one of the preceding claims, wherein the pass (2) and/or the releasing means (6) are provided with rewritable memory means (18).

9. A lock (1) according to any one of the preceding claims, wherein the locking means further comprise attachment means (8), such as a cable or chain, for anchoring the bicycle (10) to the fixed world.

10. A system (3) for giving bicycles (10) on loan, comprising
- at least one issuing station (32) provided with a series of bicycles (10), each provided with a lock (1) according to any one of claims 1-9, and further provided with issuing means (33), arranged for issuing, to a user checking in at the issuing station, a pass (2), provided with an operating code (3) of a lock (1) of a bicycle (10) to be given on loan to this user;
- at least one returning station (34), arranged for returning a bicycle (10) and associated pass (2) in order to end the loan, and for this purpose provided with receiving means (35) for identifying the returned pass (2), and
- a central management system (36) associated with the issuing and returning stations (32, 34), arranged for keeping track of operating codes (3) issued and collected, respectively, at the issuing and returning stations (32.34) and regulating the issue of bicycles (10) on the basis thereof.

11. Use of a bicycle lock (10) according to any one of claims 1-9, for release and management of bicycles (10) in a loan system (30) according to claim 10 and for locking the bicycles (10) during the loan, in order to protect the bicycle (10) from unauthorized use.
